# EUROPÄISCHE PATENTANMELDUNG

(11) **EP 4 424 736 A1**
(43) Veröffentlichungstag der Anmeldung: **04.09.2024**
(21) Anmeldenummer: 23159744.4
(22) Anmeldetag: 02.03.2023
(51) Int. Cl.: C08G 18/18, C08G 18/20, C08G 18/36, C08G 18/40, C08G 18/48, C08G 18/66, C08G 18/76, C08L 75/08, C08L 71/02

(54) **NACHHALTIGE POLYOL-BASIERTE BASISZUSAMMENSETZUNG, DARAUS HERGESTELLTE SCHAUMZUSAMMENSETZUNG UND DARAUS HERGESTELLTER FORMKÖRPER FÜR BRANDSCHUTZZWECKE**

(71) Anmelder: Hilti Aktiengesellschaft, 9494 Schaan (LI)
(72) Erfinder: Wehner, Marius, 82061 Neuried (DE); Reineck, Marie, 86916 Kaufering (DE); Paetow, Mario, 86899 Landsberg am Lech (DE); Lu, Xiaoyang, 95170 Deuil -la-Barre (FR)
(74) Vertreter: Hilti Aktiengesellschaft Corporate Intellectual Property

(57) **Zusammenfassung**

Die vorliegende Erfindung betrifft eine Polyol-basierte Basiszusammensetzung umfassend mindestens ein nachhaltiges Polyol und einen nachhaltigen Füllstoff sowie eine Schaumzusammensetzung zur Herstellung eines geschäumten Formkörpers für Brandschutzzwecke. Ferner betrifft die vorliegende Erfindung einen aus der Schaumzusammensetzung hergestellten Formkörper und ein Verfahren zur Herstellung des Formkörpers. Die erfindungsgemäßen Zusammensetzungen und der daraus hergestellte Formkörper für Brandschutzzwecke umfassen mindestens ein nachhaltiges Polyol und mindestens einen nachhaltigen Füllstoff, wodurch die CO₂-Bilanz des Formkörpers und die Aschekrustenhärte im Brandfall verbessert werden.

## Beschreibung

Die vorliegende Erfindung betrifft eine Polyol-basierte Basiszusammensetzung umfassend mindestens ein nachhaltiges Polyol und einen nachhaltigen Füllstoff sowie eine Schaumzusammensetzung zur Herstellung eines geschäumten Formkörpers für Brandschutzzwecke. Ferner betrifft die vorliegende Erfindung einen aus der Schaumzusammensetzung hergestellten Formkörper und ein Verfahren zur Herstellung des Formkörpers. Die erfindungsgemäßen Zusammensetzungen und der daraus hergestellte Formkörper für Brandschutzzwecke umfassen mindestens ein nachhaltiges Polyol und mindestens einen nachhaltigen Füllstoff, wodurch die CO₂-Bilanz des Formkörpers und die Aschekrustenhärte im Brandfall verbessert werden.

### Hintergrund

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen Brandschutzabschottungsmaterialen, wie beispielsweise Brandschutzkissen, und Brandschutzsteine, eingebracht. Hierbei handelt es sich um sogenannte Formkörper, welche im Rahmen eines definierten Herstellungsprozesses produziert werden. Diese Formkörper basieren in vielen Fällen aus Polyurethanschäumen. Zusätzlich existieren bereits Brandschutzmaterialien auf Polyurethanschaum für Fugenanwendungen.

Bekannt sind auch sogenannte Ortsschäume. Als Ortschaum wird ein Schaum bezeichnet, der direkt an der Verwendungsstelle im Spritz- oder Gießverfahren ein- bzw. aufgebracht wird und anschließend aufschäumt. Unterschieden werden Ein- und Mehrkomponentenschäume. Viele Ortschäume bestehen aus Polyurethan (PU).

Im Laufe der letzten Jahre ist es auch bei der Herstellung von Brandschutzprodukten immer wichtiger geworden, die Kohlenstoffdioxidbilanz (CO₂-Bilanz) zum Schutz des Klimas zu verbessern. Mit den Klimazielen der europäischen Union wird bis 2030 eine Reduktion der Treibhausgase um 55% im Vergleich zu 1990 angestrebt, bis 2050 wird Klimaneutralität angestrebt. Zur Herstellung von geschäumten Formkörpern für Brandschutzanwendungen, wie beispielsweise Brandschutzkissen und Brandschutzsteinen, werden der Natur Rohstoffe entnommen und diese nach der Verwendung als Müll entsorgt. Bei der Verarbeitung der Rohstoffe hin zum Endprodukt wird konstant Kohlenstoffdioxid freigesetzt, welches klimaschädlich ist.

Für jedes Produkt kann der sogenannte CO₂-Fußabdruck (carbon footprint, CFP) ermittelt werden, der dessen CO₂-Bilanz beschreibt. Der CFP eines Produkts wird üblicherweise im Rahmen eines Life-Cycle Assessments nach ISO 14040/14044 bestimmt. Die Verwendung von recyclierten Materialien verbessert den CO₂-Fußabdruck eines Produktes in der Regel.

Es ist prinzipiell bekannt zur Reduktion des CO₂-Fußabdrucks von polyurethan-basierten Schaumzusammensetzungen nachhaltige Rohstoffe, wie beispielsweise naturölbasierte Polyole oder biobasierte Polyole einzusetzen. Häufig werden hierzu naturölbasierte Polyole auf Basis von Rizinusöl verwendet.

Naturölbasierte PU-Brandschutzschäume leiden oft jedoch unter Performanceproblemen im Brandfall, wie beispielsweise einer zu weichen Aschekruste im Brandfall. Es hat sich gezeigt, dass diese Performancenachteile auf den Einsatz des naturölbasierten Polyols zurückzuführen sind, so dass die naturölbasierten Polyole nicht in einer beliebigen Menge eingesetzt werden können, üblicherweise < 15 Gew.-%.

In Anbetracht der obigen Ausführungen besteht daher Bedarf geschäumte Formkörper für Brandschutzanwendungen auf Basis von Polyurethan bereitstellen zu können, die sich durch eine verbesserte CO₂-Bilanz auszeichnen und mindestens vergleichbare Brandschutzeigenschaften hinsichtlich Aschekrustenstabilität aufweisen.

Die Aufgabe der Erfindung ist daher geschäumte Formkörper für Brandschutzanwendungen auf Basis von Polyurethanen bereitzustellen, die eine verbesserte CO₂-Bilanz im Vergleich zu den bekannten Formkörpern für Brandschutzanwendungen aufweisen. Die geschäumten Formkörper sollen mindestens vergleichbare, bevorzugt verbesserte, Brandschutzeigenschaften aufweisen wie bereits aus dem Stand der Technik bekannte geschäumte Formkörper auf Basis von naturölbasierten Polyurethanen.

Die der Erfindung zugrundeliegende Aufgabe konnte überraschenderweise durch den Einsatz einer Polyol-basierten Basiszusammensetzung umfassend mindestens ein nachhaltiges Polyol und mindestens einen nachhaltigen Füllstoff gemäß Anspruch 1 gelöst werden.

Ein zweiter Gegenstand der Erfindung ist ferner eine Schaumzusammensetzung umfassend die Polyol-basierte Basiszusammensetzung und mindestens ein Polyisocyanat.

Ein dritter Gegenstand der Erfindung ist ein aus der Schaumzusammensetzung hergestellter Formkörper für Brandschutzanwendungen.

Ein vierter Gegenstand der Erfindung ist auch ein Verfahren zur Herstellung des Formkörpers aus der Polyol-basierten Basiszusammensetzung.

Ein fünfter Gegenstand ist auch die Verwendung mindestens eines nachhaltigen Polyols und mindestens eines nachhaltigen Füllstoffs zur Verbesserung der CO₂-Bilanz eines geschäumten Formkörpers auf Basis von Polyurethan.

Zum besseren Verständnis der Erfindung werden die folgenden Erläuterungen der hierin verwendeten Terminologie als sinnvoll erachtet. Im Sinne der Erfindung bedeutet:
- "*Polyol-basierte Basiszusammensetzung*" ist eine Zusammensetzung umfassend mindestens ein nachhaltiges Polyol, mindestens ein dämmschichtbildendes Additiv, mindestens einen nachhaltigen Füllstoff und ein Treibmittel., Die Polyol-basierte Basiszusammensetzung ist so gestaltet, dass eine Reaktion der Komponenten erst nach Mischen mit mindestens einem Polyisocyanat stattfindet.
- "*Schaumzusammensetzung*" ist eine homogenisierte, teil-homogenisierte oder nichthomogenisierte Zusammensetzung umfassend die Polyol-basierte BasisZusammensetzung und mindestens ein Polyisocyanat.
- "*Formkörper*" bezeichnet das aufgeschäumte Reaktionsprodukt der Polyol-basierten Basiszusammensetzung mit mindestens einem Polyisocyanat, welches durch einen Formgebungsprozess in eine vordefinierte Form gebracht wird.
- "*nachhaltiges Polyol"* ist ein Sammelbegriff für alle Polyole, die auf natürlichen oder recyclierbaren Rohstoffen basieren und kein direktes Produkt einer ausschließlich petrochemischen Herstellung sind (sogenannte synthetische Polyole). Insbesondere fallen unter den Begriff des nachhaltigen Polyols naturölbasierte Polyole und biobasierte Polyole, aber auch Polyole, welche durch einen Recyclingprozess derart aufbereitet werden, dass sie als Polyoledukt eingesetzt werden können.
- "*nachhaltiger Füllstoff*" ist ein Sammelbegriff für alle Füllstoffe, welche durch deren Verwendung den CO₂-Fußabdruck einer Zusammensetzung oder eines Produktes / Erzeugnisses senken können. Nachhaltige Füllstoffe sind in der Regel natürlichen Ursprungs oder resultieren aus wenig energieintensiven Prozessen, Recycling-, Aufbereitungs- oder Wiederverwertungsprozessen oder fallen als Abfallprodukte in industriellen Prozessen an. Nachhaltige Füllstoffe im Sinne der vorliegen Erfindung umfassen insbesondere Lignin (Biopolymer, welches in die pflanzliche Zellwand eingelagert wird), modifiziertes Lignin wie beispielsweise Kraft-Lignin und/oder sämtliche Formen von Stärke (Polysaccharid mit der Formel (C₆H₁₀O₅)ₙ).
- "*Isocyanate*" sind Verbindungen, die eine funktionelle Isocyanatgruppe -N=C=O aufweisen und durch die Struktureinheit R-N=C=O charakterisiert werden (mit R als organischem Rest);
- "*Polyisocyanate*" sind Verbindungen, die mindestens zwei funktionelle Isocyanatgruppen -N=C=O aufweisen; Diisocyanate, die auch unter die Definition von Polyisocyanat fallen, werden beispielsweise durch die Struktur O=C=N-R-N=C=O charakterisiert, wobei R einen beliebigen organischen Rest darstellt;
- "*mittlere NCO-Funktionalität*"*,* beschreibt die Anzahl an Isocyanatgruppen in der Verbindung; bei einer Mischung aus Isocyanaten beschreibt die "gemittelte NCO-Funktionalität" die gemittelte Anzahl an Isocyanatgruppen in der Mischung und wird nach der Formel: gemittelte NCO-Funktionalität (Mischung) = Σ mittlere NCO-Funktionalität (Isocyanat i) / nᵢ, also die Summe der mittleren NCO-Funktionalität der Einzelkomponenten geteilt durch den gewichtsprozentualen Anteil der Einzelkomponenten, ermittelt;
- Als "*Alkohole*" werden organische Verbindungen bezeichnet, bei denen mindestens eine Hydroxylgruppe -OH an ein Kohlenstoffatom gebunden ist. "Polyole" sind Alkohole, die mindestens zwei funktionelle Hydroxylgruppen -OH aufweisen;
- "*OH-Funktionalität*" eines Alkohols beschreibt die Anzahl aktiver Wasserstoffatome pro Polyol, die mit einer Isocyanatgruppe reagieren können;
- "*ein*", "*eine*", "*einer*" als Artikel vor einer chemischen Verbindungsklasse, z.B. vor dem Wort "Isocyanat", dass eine oder mehrere unter diese chemische Verbindungsklasse fallende Verbindungen, z.B. verschiedene Isocyanate gemeint sein können. In einer bevorzugten Ausführungsform ist mit diesem Artikel nur eine einzelne Verbindung gemeint;
- "*mindestens ein*"*,* "*mindestens eine*"*,* "*mindestens einer*" zahlenmäßig "*ein oder mehrere*"*.* In einer bevorzugten Ausführungsform ist mit diesem Begriff zahlenmäßig "*ein*", "*eine*", "*einer*" gemeint;
- "*enthalten*", "*umfassen*" und "*beinhalten*", dass neben den genannten Bestandteilen noch weitere vorhanden sein können. Diese Begriffe sind einschließlich gemeint und umfassen daher auch "*bestehen aus*". *"Bestehen aus"* ist abschließend gemeint und bedeutet, dass keine weiteren Bestandteile vorhanden sein können. In einer bevorzugten Ausführungsform bedeuten die Begriffe *"enthalten"*, *"umfassen"* und *"beinhalten"* den Begriff *"bestehen aus"*;

### Polyol-basierte Basiszusammensetzung

Erfindungsgemäß umfasst die Polyol-basierte Basiszusammensetzung mindestens ein nachhaltiges Polyol a1).

In einer bevorzugten Ausführungsform ist das nachhaltige Polyol ein Polyol basierend auf einem oder mehreren Naturölen. Der Begriff "*Naturöl*" im Sinne der vorliegenden Erfindung ist definiert als ein Ausgangsmaterial, welches nicht vom Erdöl abgeleitet wird. Hierzu zählen insbesondere Öle, die von einer Pflanze, einschließlich deren Früchte, Schalen, Nüsse und/oder Samen stammen. Es können aber auch tierische Fette und/oder Öle oder jedes andere nicht vom Erdöl abgeleitete Öl eingesetzt werden. Diese natürlich-vorkommenden Materialien sind umweltfreundlich und werden auch als biobasierte Ausgangsmaterialien bezeichnet. Polyole, hergestellt aus diesen verschiedenen Nicht-Erdölquellen werden häufig auch als "erneuerbare Polyole", "biobasierte Polyole" und/oder "nachhaltige Polyole" bezeichnet.

Während einige Naturöle Hydroxylgruppen enthalten, müssen die meisten natürlichen Öle in die Hydroxylgruppen enthaltenden Polyole durch chemische Verfahren, wie Hydroxylierung, Epoxidierung, Ozonolyse, Hydroformylierung/Hydrierung oder andere geeignete Verfahren, umgewandelt werden.

Beispiele für solche natürlichen Öle als Ausgangsmaterialien für nachhaltige Polyole, die in ihrer natürlich vorkommenden Form keine Hydroxylgruppen enthalten sind Sojabohnenöl, Canolaöl, Sonnenblumenöl, Maisöl, Leinsamenöl, Mohnsamenöl, Baumwollsamenöl, Tungöl, Palmöl, Erdnussöl, Fischöl, Olivenöl, Safloröl, Rapsöl und Kokosöl.

Zur Herstellung der nachhaltigen Polyole basierend auf einem oder mehreren Naturölen werden die natürlichen Öle beispielsweise durch ein geeignetes Verfahren hydroxyliert oder alkoxyliert. In diesem Zusammenhang wird auf die Patentschrift EP2202256 A1 verwiesen, worin geeignete Verfahren zur Hydroxylierung bzw. Alkoxylierung von Naturölen beschrieben werden.

Cashewnußschalenöl (Cashewnussschalen-Flüssigkeit, Cashew-Schalenöl) ist als Ausgangmaterial zur Herstellung der nachhaltigen Polyole besonders bevorzugt. Ganz besonders bevorzugt sind demnach auf Cashew-Nussschalenöl basierende Polyetherpolyole und Cashew-Nussschalenöl basierende Polyesterpolyole.

Kommerziell sind Cashewnußschalenöl basierte Polyole beispielsweise von der Fa. Elmira Industrial Supplies unter dem Handelsnamen ExaPhen oder von der Fa. Cardolite Corp. erhältlich.

In einer weiteren Ausführungsform der Erfindung kann auch Riszinusöl als nachhaltiges Polyol a1) eingesetzt werden.

Es ist auch möglich, dass als nachhaltiges Polyol a1) alleine oder in Kombination mit den vorgenannten naturöl-basierten Polyolen ein recycliertes Polyol eingesetzt wird. Der Begriff "recycliertes Polyol" im Sinne der vorliegenden Erfindung bezeichnet ein Polyol, welches durch das Recycling von polyurethan-basierten Konsumgütern - wie beispielsweise Polyurethanmatratzen - hergestellt wurde.

Kommerziell sind recyclierte Polyole auf Basis von polyurethanbasierten Matratzen von der Fa. RAMPF unter der Marke Recypol^{®} oder von der Fa. Dow unter der Marke Renuva^{®} erhältlich.

In einer bevorzugten Ausführungsform umfasst die Polyol-basierte Basiszusammensetzung neben dem mindestens einen nachhaltigen Polyol a1) mindestens ein weiteres Polyol a2), welches nicht unter die Definition eines nachhaltigen Polyols a1) im Sinn der vorliegenden Erfindung fällt. In anderen Worten bedeutet dies, dass das Polyol a2) ein sogenanntes synthetisch Polyol darstellt, welches aus Erdöl bzw. Erdöledukten abgeleitet wird.

Die Polyol-basierte Basiszusammensetzung umfasst somit bevorzugt eine Polyol-Mischung aus mindestens zwei Polyolen, wobei das Verhältnis des nachhaltigen Polyols a1) und des weiteren Polyols a2) bevorzugt 10:1 bis 1:100, weiter bevorzugt 5:1 bis 1:10, weiter bevorzugt 4:1 bis 1:5 beträgt. Besonders bevorzugt ist das Verhältnis des nachhaltigen Polyols a1) und des weiteren Polyols a2) nicht größer als 2:1, besonders bevorzugt nicht größer als 1.5:1.

Das mindestens eine weitere Polyol a2) ist bevorzugt ausgewählt aus der Gruppe der Polyetherpolyole, der Polyesterpolyole oder Mischungen daraus.

Polyetherpolyole sind aus einem Polyether-Grundgerüst aufgebaut. Das Grundgerüst kann linear oder verzweigt aufgebaut sein und die funktionellen Hydroxylgruppen terminal und/oder entlang der Kette enthalten.

Die Polyetherpolyole werden vorzugsweise durch Polymerisation von Epoxiden wie Ethylenoxid, Propylenoxid, Butylenoxid, Tetrahydrofuran, Styroloxid oder Epichlorhydrin mit sich selbst oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine hergestellt. Besonders bevorzugte Epoxide sind Ethylenoxid und Propylenoxid.

Beispiele geeigneter kommerziell erhältlicher Polyetherpolyole umfassen: ACCLAIM^{®} POLYOL 12200 N, ACCLAIM^{®} POLYOL 18200 N, ACCLAIM^{®} POLYOL 4200, ACCLAIM^{®} POLYOL 6300, ACCLAIM^{®} POLYOL 8200 N, ARCOL^{®} POLYOL 1070, ARCOL^{®} POLYOL 1 105 S, DESMOPHEN^{®} 1 1 10 BD, DESMOPHEN^{®} 1 11 1 BD, DESMOPHEN^{®} 1262 BD, DESMOPHEN^{®} 1380 BT, DESMOPHEN^{®} 1381 BT, DESMOPHEN^{®} 1400 BT, DESMOPHEN^{®} 2060 BD, DESMOPHEN^{®} 2061 BD, DESMOPHEN^{®} 2062 BD, DESMOPHEN^{®} 3061 BT, DESMOPHEN^{®} 401 1 T, DESMOPHEN^{®} 4028 BD, DESMOPHEN^{®} 4050 E, DESMOPHEN^{®} 5031 BT, DESMOPHEN^{®} 5034 BT, DESMOPHEN^{®} 10WF15, DESMOPHEN^{®} 10WF16, DESMOPHEN^{®} 10WF18, DESMOPHEN^{®} 5168T und DESMOPHEN^{®} 5035 BT (Bayer; Covestro); Lupranol 2043, Lupranol 2048, Lupranol 2090, Lupranol 2092, Lupranol 2095, Pluriol E600 (BASF); Voranol CP 755, Voranol RA 800, Voranol CP 6001 , Voranol EP 1900 (Dow) oder Mischungen aus Polyester und Polyetherpolyolen wie WorleePol 230 (Worlee).

In einer bevorzugten Ausführungsform enthält das Polyol a2) ein oder mehrere Polyesterpolyole. Bevorzugt sind die Polyesterpolyole ausgewählt aus Kondensationsprodukten von Di- und Polycarbonsäuren, z.B. aromatische Säuren wie Phthalsäure und Isophthalsäure, aliphatische Säuren wie Adipinsäure und Maleinsäure, cycloaliphatischen Säuren, wie Tetrahydrophthalsäure und Hexahydrophthalsäure, und/oder deren Derivaten, wie Anhydride, Ester oder Chloride, und einer überschüssigen Menge aus mehrfachfunktionellen Alkoholen, z.B. aliphatische Alkohole wie Ethandiol, 1,2-Propandiol, 1,6-Hexandiol, Neopentylglykol, Glycerin, Trimethylolpropan und cycloaliphatische Alkohole wie 1,4-Cyclohexandimethanol.

Weiterhin sind die Polyesterpolyole ausgewählt aus Polyacrylatpolyolen, wie Copolymerisate von Estern der Acryl- und/oder Methacrylsäure, wie z.B. Ethylacrylat, Butylacrylat, Methylmethacrylat mit zusätzlichen Hydroxylgruppen, und Styrol, Vinylester und Maleinsäureester. Die Hydroxylgruppen in diesen Polymeren werden über funktionalisierte Ester der Acryl- und Methacrylsäure, z.B. Hydroxyethylacrylat, Hydroxyethylmethacrylat und/oder Hydroxypropylmethacrylat eingeführt.

Weiterhin sind die Polyesterpolyole ausgewählt aus Polycarbonatpolyolen. Verwendbare Polycarbonatpolyole sind Hydroxylgruppen aufweisende Polycarbonate, wie zum Beispiel Polycarbonatdiole. Diese sind durch Reaktion von Kohlensäure oder Kohlensäurederivaten mit Polyolen oder durch die Copolymerisation von Alkylenoxiden, wie zum Beispiel Propylenoxid, mit CO₂ erhältlich. Zusätzlich oder alternativ sind die eingesetzten Polycarbonate aus linearen aliphatischen Ketten aufgebaut. Geeignete Kohlensäurederivate sind etwa Kohlensäurediester, wie z.B. Diphenylcarbonat, Dimethylcarbonat oder Phosgen.

Der gewichtsprozentuale Anteil aller Polyole in der Polyol-basierten Basiszusammensetzung beträgt vorzugsweise 20 Gew.-% bis 95 Gew.-%. Bezogen auf das Gesamtgewicht der Schaumzusammensetzung beträgt der gewichtsprozentuale Anteil vorzugsweise > 10 Gew.-% bis 95 Gew.-%, weiter bevorzugt 20 Gew.-% bis 92 Gew.-%, noch weiter bevorzugt 25 Gew.-% bis 80 Gew.-%.

### Nachhaltiger Füllstoff

Die erfindungsgemäße Polyol-basierte Basiszusammensetzung und die erfindungsgemäße Schaumzusammensetzung umfassen mindestens einen nachhaltigen Füllstoff.

Der Begriff "*nachhaltiger Füllstoff*" im Sinne der vorliegenden Erfindung beschreibt einen Füllstoff ausgewählt aus der Gruppe bestehend aus (modifiziertem) Lignin, Stärke und Mischungen daraus.

Es wurde überraschend gefunden, dass der erfindungsgemäße Einsatz eines nachhaltigen Füllstoffs es ermöglicht, nachhaltige Polyole in der Polyol-basierten Basiszusammensetzung einzusetzen, ohne die Brandschutzperformance von Formkörpern, die aus der Polyol-basierten Basiszusammensetzung hergestellt wurden, im Brandfall zu beeinträchtigen. Insbesondere zeichnen sich Formkörper, die aus einer erfindungsgemäßen Polyol-basierten Basiszusammensetzung hergestellt wurden, durch eine verbesserte Aschekrustenhärte aus.

Der Begriff Lignin im Sinne der vorliegenden Erfindung bezeichnet ein Biopolymer, welches in den Zellen von Bäumen, Sträuchern, im Bambus, in Rattan, in Getreide und anderen Gräsern synthetisiert wird und in die Zellwand eingelagert wird. Zur Gewinnung von Lignin wird dieses von Zellulose separiert. So ist Lignin ein Nebenprodukt bei der Papier- und Zellstoffproduktion. Unter dem Begriff "Lignin" im Sinne der vorliegenden Erfindung sind auch chemisch modifizierte Varianten, wie beispielsweise das sogenannte Kraft-Lignin, zu verstehen.

Der Begriff Stärke im Sinne der vorliegenden Erfindung bezeichnet ein Polysaccharid mit der Formel (C₆H₁₀O₅)ₙ, welches aus α-D-Glucose-Einheiten besteht. Stärke ist einer der wichtigsten Bestandteile von pflanzlichen Zellen und wird durch bekannte Verfahren aus Pflanzen gewonnen.

Im Rahmen der vorliegenden Erfindung können alle dem Fachmann bekannten in der Natur vorkommenden Stärken eingesetzt werden. Hierzu zählen insbesondere Knollenstärken und Getreidestärken. Als Knollenstärke können Kartoffelstärke, Süßkartoffelstärke, Maniokstärke oder Mischungen daraus eingesetzt werden. Als Getreidestärke kommen Gerstenstärke, Weizenstärke, Roggenstärke, Reisstärke oder Maisstärke verwendet werden. Auch Rosskastanienstärke oder Erbsenstärke kann Verwendung finden. Die Verwendung von Maisstärke ist bevorzugt.

Vorzugsweise liegt der Wassergehalt der eingesetzten Stärke unterhalb von 10%, bevorzugt unterhalb von 6%. Dies wird vorzugsweise durch eine Trocknung der Stärke erzielt, bevor diese der Polyol-basierten Basiszusammensetzung zugesetzt wird.

Der nachhaltige Füllstoff wird vorzugsweise in einem gewichtsprozentualen Bereich von 1 bis 70 Gew.-% bezogen auf das Gesamtgewicht der Polyol-basierten Basiszusammensetzung, insbesondere in einem Anteil von 2 Gew.-% bis 50 Gew.-%, weiter bevorzugt in einem Anteil von 3 Gew.-% bis 40 Gew.-% in der erfindungsgemäßen Polyol-basierten Basiszusammensetzung eingesetzt. In Bezug auf die Schaumzusammensetzung enthält diese den nachhaltigen Füllstoff wird vorzugsweise in einem gewichtsprozentualen Bereich von 1 bis 40 Gew.-%, bevorzugt in einem Anteil von 2 Gew.-% bis 30 Gew.-%, weiter bevorzugt in einem Anteil von 3 Gew.-% bis 20 Gew.-% bezogen auf das Gesamtgewicht der Schaumzusammensetzung.

### Dämmschichtbildendes Additiv

Erfindungsgemäß enthält die Polyol-basierte Basiszusammensetzung ein dämmschichtbildendes Additiv, wobei das Additiv sowohl eine einzelne Verbindung als auch ein Gemisch von mehreren Verbindungen umfassen kann.

Zweckmäßig werden als dämmschichtbildende Additive solche eingesetzt, die unter Hitzeeinwirkung aufblähen und eine isolierende Schicht aus schwerentflammbaren Material bilden.Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-Polyole, PO-Polyole und EO-PO-Polyole. Bevorzugt werden Pentaerythrit, Dipentaerythrit oder Polyvinylacetat eingesetzt.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, CO₂, H₂O, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferanten, einen Dehydrierungskatalysator und ein Gasbildner als auch thermisch expandierbare Verbindungen umfasst.

Prinzipiell kann das dämmschichtbildende Additiv in einem großen gewichtsprozentualen Bereich in der Polyol-basierten Basiszusammensetzung enthalten sein, nämlich bevorzugt in einer Menge von 5 bis 80 Gew.-% bezogen auf das Gesamtgewicht der Polyol-basierten Basiszusammensetzung. Wird die isolierende Schicht durch physikalische Intumeszenz gebildet, ist das dämmschichtbildende Additiv vorzugsweise in einer Menge von 5 bis 80 Gew.-% bezogen auf das Gesamtgewicht der Polyol-basierten Basiszusammensetzung enthalten. Um hier eine möglichst hohe Intumeszenzrate zu bewirken, wird der Anteil des dämmschichtbildenden Additivs in der Gesamtformulierung so hoch wie möglich eingestellt, wobei darauf geachtet werden muss, dass die Viskosität der Zusammensetzung nicht zu hoch wird, damit sich die Zusammensetzung noch gut verarbeiten lässt. Bevorzugt beträgt der Anteil 5 bis 80 Gew.-% und besonders bevorzugt 10 bis 70 Gew.-%, bezogen auf das Gesamtgewicht der Polyol-basierten Basiszusammensetzung.

Da die im Brandfall gebildete Aschekruste in der Regel zu instabil ist und abhängig von deren Dichte und Struktur etwa durch Luftströmungen Verblasen werden kann, was sich negativ auf die isolierende Wirkung auswirkt, wird zu den eben aufgeführten Komponenten bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern. Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von <50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere Flammschutzmittel zugesetzt werden, wie Phosphatester, halogenhaltige Verbindungen wie z.B. Tri-(2-chlorisopropyl)-phosphat (TOPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzmittel können bevorzugt in einer Menge von 3 bis 6 Gew.-%, bezogen auf die gesamte Zusammensetzung, enthalten sein.

### Treibmittel

Erfindungsgemäß enthält die Polyol-basierte Basiszusammensetzung ein Treibmittel. Als Treibmittel kommen prinzipiell alle dem Fachmann bekannten chemischen und physikalischen Treibmittel in Betracht. Hierzu zählen insbesondere solche Treibmittel, die in der Lage sind, CO₂ oder H₂ freizusetzen.

Vorzugsweise enthält die Polyol-basierte Basiszusammensetzung ein Treibmittel, welches ein oder mehrere Verbindungen umfasst, die in der Lage sind durch Reaktion Kohlendioxid (CO₂) freizusetzen. Als Treibmitteln sind alle gängigen chemischen Treibmittel geeignet, die durch chemische Reaktion zwischen zwei Bestandteilen Kohlendioxid freisetzen.

Erfindungsgemäß ist das Treibmittel so ausgestaltet, dass eine Reaktion erst nach Aktivierung stattfindet. Als Aktivierung ist auch das Vermischen mit einer weiteren Komponente, wie beispielsweise dem später beschriebenen Polyisocyanat, zu verstehen.

In der einfachsten Ausgestaltung der Erfindung umfasst das Treibmittel Wasser bzw. besteht aus Wasser, welches nach Vermischen mit dem Polyisocyanat Kohlendioxid freisetzt. Unter dem Begriff "Wasser" werden erfindungsgemäß in diesem Zusammenhang auch wasserfreisetzende Komplexe, Addukte und Einschlussverbindungen verstanden. Der gewichtsprozentuale Anteil des Wassers beträgt vorzugsweise 0,1 bis 10 Gew.-%, bevorzugter 0,2 bis 8 Gew.-% und weiter bevorzugt 0,2 bis 6 Gew.-% bezogen auf das Gesamtgewicht der Schaumzusammensetzung.

Weitere Beispiele für Treibmittel sind Alkane wie n-Pentan, iso-Pentan, Gemische aus iso- und n-Pentan, Cyclopentan, Cyclohexan, Mischungen aus Butanisomeren und den genannten Alkanen, halogenierte Olefine oder halogenierte Verbindungen wie zum Beispiel Dichlormethan, Dichlormonofluormethan, Difluormethan, Trifluormethan, Difluorethan, 1,1,1,2-Tetrafluroethan, Tetrafluorethan, 1,1,1,3,3,3-Hexafluorpropan, 1,1,1,3,3-Pentafluorpropan, Chlordifluorethan, 1,1-Dichlor-2,2,2-Trifluorethan, 2,2-Dichlor-2-fluorethan, Heptafluorpropan und Schwefelhexafluorid und Kohlendioxid. Bevorzugt werden Kohlendioxid, Cyclopentan, n-Pentan und iso-Pentan einzeln oder als Gemisch, gegebenenfalls in der Abmischung mit Wasser, eingesetzt. Weitere geeignete Treibmittel sind Carbonsäuren wie Ameisensäure, Essigsäure, Oxalsäure und chemische Treibmittel, die im Verlauf des Schäumprozesses Gase freisetzen, wie zum Beispiel Azoverbindungen. Bevorzugt werden diese Treibmittel in Kombination mit Wasser eingesetzt.

In einer anderen Ausführungsform umfasst das Treibmittel eine Säure und eine Verbindung, die mit Säuren unter Bildung von Kohlendioxid reagieren kann.

Als Verbindungen, die mit Säuren unter Bildung von Kohlendioxid reagieren können, können carbonat- und hydrocarbonathaltige Verbindungen, insbesondere Metall- oder (insbesondere quarternäre) Ammoniumcarbonate verwendet werden, wie Carbonate von Alkali - oder Erdalkalimetallen, zum Beispiel CaCO₃, NaHCOs, Na₂CO₃, K₂CO3, (NH₄)₂CO₃ und dergleichen, wobei CaCOs bevorzugt ist.

Als Säure kann jede saure Verbindung verwendet werden, die in der Lage ist, mit carbonat- oder hydrogencarbonathaltigen Verbindungen unter Abspaltung von Kohlendioxid zu reagieren, wie etwa Phosphorsäure, Salzsäure, Schwefelsäure, Ascorbinsäure, Polyacrylsäure, Benzoesäure, Toluolsulfonsäure, Weinsäure, Glycolsäure Milchsäure; organische Mono-, Di- oder Polycarbonsäuren, wie Essigsäure, Chloressigsäure, Trifluoressigsäure, Fumarsäure, Maleinsäure, Zitronensäure oder dergleichen, Aluminiumdihydrogenphosphat, Natriumhydrogensulfat, Kaliumhydrogensulfat, Aluminiumchlorid, Harnstoffphosphat und andere säurefreisetzende Chemikalien oder Mischungen von zwei oder mehreren davon. Die Säure erzeugt das Gas als eigentliches Treibmittel.

Als Säure-Komponente kann eine wässrige Lösung einer anorganischen und/oder organischen Säure, benutzt werden. Ferner können gepufferte Lösungen von Zitronen-, Wein-, Essig-, Phosphorsäure und dergleichen verwendet werden.

Um dem zu bildenden Schaum eine höhere Stabilität zu verleihen, müssen die gebildeten Zellen bis zur Aushärtung des Bindemittels stabil bleiben, um den Kollaps der polymeren Schaumstruktur zu verhindern. Eine Stabilisierung wird umso notwendiger, je niedriger die Dichte des Schaumstoffes sein soll, d.h. je größer die Volumenexpansion ist. Eine Stabilisierung wird gewöhnlich mittels Schaumstabilisatoren bzw. -regulatoren, auch bekannt als Zellöffner bekannt, erreicht.

Sofern erforderlich kann die erfindungsgemäße Polyol-basierte Basiszusammensetzung daher ferner einen Schaumstabilisator/-regulator enthalten. Hierzu eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2- Ethylhexanol, 1-Decanol, 1-Undecanol, 1-Dodecanol (Laurylalkohol), 1-Tetradecanol (Myristylalkohol) und 1- Octadecanol (Stearylalkohol). Es können auch Gemische der genannten längerkettigen Monoalkohole eingesetzt werden. Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Polyether-Polysiloxane, Ester der Sulfobernsteinsäure und/oder Alkali- oder Erdalkalimetallalkanoate eingesetzt. Besonders bevorzugt werden EO/PO-Blockcopolymere eingesetzt.

### Erfindungsgemäße Schaumzusammensetzung

Ein zweiter Gegenstand der vorliegenden Erfindung ist auch eine Schaumzusammensetzung umfassend die zuvor beschriebene Polyol-basierte Basiszusammensetzung und mindestens ein Polyisocyanat. Zur Herstellung der Schaumzusammensetzung werden die Komponenten der Polyol-basierten Basiszusammensetzung mit dem Polyisocyanat vermischt und homogenisiert.

Als Polyisocyanat können alle dem Fachmann bekannten aliphatischen, cycloaliphatischen und/oder aromatischen Isocyanate mit einer mittleren NCO-Funktionalität von 2 oder höher, einzeln oder in beliebigen Mischungen untereinander, verwendet werden. Die NCO-Funktionalität gibt an, wie viele NCO-Gruppen in dem Polyisocyanat vorhanden sind. Polyisocyanat bedeutet dabei, dass zwei oder mehr NCO-Gruppen in der Verbindung enthalten sind.

Geeignete aromatische Polyisocanate sind solche mit aromatisch gebundenen Isocyanatgruppen, wie Diisocyanatobenzole, Touloldiisocyanate, Diphenyldiisocyanate, Diphenylmethandiisocyanate, Diisocyanatonaphathaline, Triphenylmethantriisocyanate, aber auch solche mit Isocyanatgruppen, die über eine Alkylengruppe, wie etwa eine Methylengruppe an einen Aromaten gebunden sind, wie Bis- und Tris-(isocyanatoalkyl)-benzole, -toluole sowie -xylole.

Bevorzugte Beispiele für aromatische Polyisocyanate sind: 2,2`-, 2,4`- und 4,4'-Diphenylmethandiisocyanat, 1,3-Phenylendiisocyanat, 1,4-Phenylendiisocyanat, 2,4-Toluylendiisocyanat, 2,5-Toluylendiisocyanat, 2,6-Toluylendiisocyanat, 1,3-Xylylendiisocyanat, 1,4-Xylylendiisocyanat, Tetramethyl-1,3-xylylendiisocyanat, Tetramethyl-1,4-xylylendiisocyanat, 1,3-Bis(isocyanatomethyl)benzol, 1,4-Bis(isocyanatomethyl)benzol, Ethylphenyldiisocyanat, 2-Dodecyl-1,3-phenylendiisocyanat, 2,4,6-Triisopropyl-*m*-phenylendiisocyanat, 2,4,6-Trimethyl-1,3-phenylendiisocyanat, Xylylendiisocyanat, 1,5-Naphthylendiisocyanat, 3,3'- Dimethyl-4,4'-biphenyldiisocyanat, 3,3'-Dimethoxy-4,4'-biphenyldiisocyanat, 3,3'- Dimethyl-4,4'-biphenyldiisocyanat, Diphenylenmethan-2,4'-diisocyanat, Diphenylenmethan-2,2'-diisocyanat, Diphenylenmethan-4,4`-diisocyanat, Triphenylmethan-4,4`,4"-triisocyanat, 5-(p-Isocyanatobenzyl)-2-methyl-*m*-phenylendiisocyanat, 4,4-Diisocyanato-3,3,5,5-tetraethyldiphenylmethan, 5,5'-Ureylendi-o-tolyldiisocyanat, 4-[(5-Isocyanato-2-methylphenyl)methyl]-*m*-phenylendiisocyanat, 4-[(3-isocyanato-4-methylphenyl)methyl]-*m*-phenylendiisocyanat, 2,2'-Methylen-*bis*[6-(o-isocyanatobenzyl)phenyl]diisocyanat. Es können auch polymere Polyisocyanate, insbesondere polymeres Diphenylmethandiisocyanat, eingesetzt werden.

Beispiele für aliphatische Polyisocyanate sind Bis-(isocyanatoalkyl)ether oder Alkandiisocyanate, wie Methandiisocyanat, Propandiisocyanate, Butandiisocyanate, Pentandiisocyanate, Hexandiisocyanate (z.B. Hexamethylendiisocyanat, HDI), Heptandiisocyanate (z.B. 2,2-Dimethylpentan-1,5- diisocyanat, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5- Methylnonandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis- (4-isocyanatocyclohexyl)methan (H₁₂MDI), Bis-(isocyanatomethyl)norbornan (NBDI) oder 3(4)-lsocyanatomethyl-1-methyl-cyclohexylisocyanat (IMCI), Octagydro-4,7- methano-1 H-indendiemthyldiisocyanat, Norbornendiisocyanat, 5-Isocyanato-1-(isocyanatomethyl)-1,3,3-trimethylcyclohexan, Ureylenbis(p-phenylenmethylene-p-phenylen)diiscoyanat.

Vorzugsweise können die Polyisocyanate auch als Präpolymere, Biurete, Isocyanurate, Iminooxadiazindione, Uretdione und/oder Allophanate vorliegen, die durch Oligomerisierung von difunktionellen Isocyanaten oder durch Umsetzung der Isocyanatverbindungen mit Polyolen oder Polyaminen, einzeln oder als Gemisch, hergestellt werden können, und die eine mittlere NCO-Funktionalität von 2 oder größer aufweisen.

Beispiele für geeignete, kommerziell erhältliche Polyisocyanate sind Desmodur^{®} N 3900, Desmodur^{®} N 100, Desmodur^{®} Ultra N 3200, Desmodur^{®} Ultra N 3300, Desmodur^{®} Ultra N 3600, Desmodur^{®} N 3800, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 3370, Desmodur^{®} XP 2599, Desmodur^{®} XP 2617, Desmodur^{®} XP 2406, Desmodur^{®} XP 2551 , Desmodur^{®} XP 2838, Desmodur^{®} XP 2840, Desmodur^{®} VL, Desmodur^{®} VL 50, Desmodur^{®} VL 51 , Desmodur^{®} ultra N 3300, Desmodur^{®} eco N 7300, Desmodur^{®} E23, Desmodur^{®} E XP 2727, Desmodur^{®} E 30600, Desmodur^{®} E 2863XPDesmodur^{®} H, Desmodur^{®} VKS 20 F, Desmodur^{®} 44V20L, Desmodur^{®} 44P01, Desmodur^{®} 44V70 L, Desmodur^{®} N3400, Desmodur^{®} N3500 (jeweils erhältlich von Covestro AG), Tolonate^{™} HDB, Tolonate^{™} HDB-LV, Tolonate^{™} HDT, Tolonate^{™} HDT- LV, Tolonate^{™} HDT-LV2 (erhältlich von Vencorex), Basonat^{®} HB 100, Basonat^{®} HI 100, Basonat^{®} HI 2000 NG (erhältlich von BASF), Takenate^{®} 500, Takenate^{®} 600, Takenate^{®} D-132N(NS), Stabio^{®} D-376N (jeweils erhältlich von Mitsui), Duranate^{®} 24A-100, Duranate^{®} TPA-100, Duranate^{®} TPH-100 (jeweils erhältlich von Asahi Kasai), Coronate^{®} HXR, Coronate^{®} HXLV, Coronate^{®} HX, Coronate^{®} HK, (jeweils erhältlich von Tosoh), Voranate T-80 (Type I and II), Isonate 181, Isonate 240, Isonate 125M, Isonate 125 MDR, Isonate 143L, Isonate 50 O,P`, PAPI 20, PAPI 27, PAPI 94, PAPI 95, PAPI 901, PAPI 580N (jeweils von DOW)..

Der gewichtsprozentuale Anteil des Polyisocyanats bezogen auf das Gesamtgewicht der Schaumzusammensetzung beträgt vorzugsweise > 0 Gew.-% bis 50 Gew.-%, weiter bevorzugt 1 Gew.-% bis 40 Gew.-%, noch weiter bevorzugt 5 Gew.-% bis 35 Gew.-%.

Die gewichtsprozentualen Mengenverhältnisse des Polyisocyanats und des Polyols werden bevorzugt so gewählt, dass das Äquivalentverhältnis von Isocyanatgruppen zu - OH-Gruppen zwischen 0,1 und 1,7, bevorzugt zwischen 0,2 und 1,2 und stärker bevorzugt zwischen 0,4 und 1,1 liegt.

Bevorzugt wird ein Katalysator sowohl für die Reaktion der Polyisocyanats mit dem Polyol als auch für die Reaktion des Isocyanats mit dem Treibmittel verwendet. In einer bevorzugten Ausführungsform der Erfindung umfasst die Schaumzusammensetzung einen Schaum- und Gelkatalysator. Vorzugsweise werden hierbei N,N,N'-trimethyl-N'-hydroxyethylbisaminoethylether (Jeffcat ZF-10), Bis-(2- dimethylaminoethyl)ether (Jeffcat ZF-20), 70% Bis-(2-dimethylaminoethyl)ether in dipropylenglycol (Jeffcat ZF-22), N-[2-[2-(dimethylamino)ethoxy]ethyl]-N-methyl-1,3-Propanediamine (Dabco NE300) oder 1,4-Diazabicyclo[2.2.2]octan in Dipropyleneglykol (DABCO 33LV) eingesetzt.

Beispiele weiterer Verbindungen, die als Katalysator eingesetzt werden können sind Zinnoctoat, Zinnoxalat, Zinnchlorid, Dioctylzinndi-(2-ethylhexanoat), Dioctylzinndilaurat, Dioctylzinndithioglykolat, Dibutylzinndilaurat, Monobutylzinntris-(2-ethylhexanoat), Dioctylzinndineodecanoat, Dibutylzinndineodecanoat, Dibutylzinndiacetat, Dibutylzinnoxid, Monobutylzinndihydroxychlorid, Organozinnoxid, Monobutylzinnoxid, Dioctylzinndicarboxylat, Dioctylzinnstannoxan, Bismutcarboxylat, Bismutoxid, Bismutneodecanoat, Zinkneodecanoat, Zinkoctoat, Zinkacetylacetonat, Zinkoxalat, Zinkacetat, Zinkcarboxylat, Aluminiumchelatkomplex, Zirkoniumchelatkomplex, Dimethylaminopropylamin, N,N-Dimethylcyclohexylamin, N,N- Dimethylethanolamin, N-(3- Dimethylaminopropyl)-N,N-diisopropanolamin, N-Ethylmorpholin, /V-Methylmorpholin, Pentamethyldiethylentriamin und/oder Triethylendiamin.

In einer Ausführungsform enthält die erfindungsgemäße Zusammensetzung ferner mindestens einen weiteren Bestandteil, ausgewählt unter Weichmachern, Vernetzungsmitteln, Bioziden, organischen und/oder anorganischen Zuschlagstoffen und/oder weiteren Additiven.

Der Weichmacher hat die Aufgabe, das ausgehärtete Polymernetzwerk weich zu machen. Ferner hat der Weichmacher die Aufgabe, eine zusätzliche flüssige Komponente einzubringen, so dass die Füllstoffe vollständig benetzt werden und die Viskosität so eingestellt wird, dass die Beschichtung verarbeitungsfähig wird. Der Weichmacher kann in solch einer Menge in der Zusammensetzung enthalten sein, dass er die eben beschriebenen Funktionen hinreichend erfüllen kann.

Geeignete Weichmacher sind unter Derivaten der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Adipinsäure, Sebacinsäure, Fumarsäure, Maleinsäure, Itaconsäure, Caprylsäure und Zitronensäure, Alkylphosphatestern und Derivaten von Polyestern und Polyethern, epoxidierten Ölen, C₁₀-C₂₁-Alkylsulfonsäureestern des Phenols und Alkylestern ausgewählt. Bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerins mit Epoxidgruppen und Esterderivate der Phosphate. Stärker bevorzugt ist der Weichmacher Bis(2-ethylhexyl)terephthalat, T rihydroxymethylpropylcaprylat, Triethylenglycol-bis(2-ethylhexanoat), 1 ,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus n-Octyl- und n-Decylsuccinat. Am stärksten bevorzugt ist der Weichmacher ein Phosphatester, da diese sowohl als Weichmacher als auch als Flammschutzmittel wirken können.

In der Zusammensetzung kann der Weichmacher bevorzugt in einer Menge bis zu 30 Gew.-%, weiter bevorzugt bis zu 20 Gew.-% und stärker bevorzugt bis zu 8 Gew.-%, bezogen auf die gesamte Zusammensetzung, enthalten sein.

Die Zusammensetzung kann neben den bereits beschriebenen Additiven gegebenenfalls übliche Hilfsmittel wie Netzmittel, etwa auf Basis von Polyacrylaten und/oder Polyphosphaten, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker und/oder Rheologieadditive, sowie Füllstoffe können der Zusammensetzung zugegeben werden. Als Rheologieadditive, wie AntiAbsetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Ein weiterer Gegenstand der vorliegenden Erfindung ist auch ein aus der erfindungsgemäßen Schaumzusammensetzung hergestellter aufgeschäumter Formkörper für Brandschutzanwendungen. Hierzu wird werden die Komponenten der Polyol-basierten Basiszusammensetzung mit dem Polyisocyanat vermischt und homogenisiert. Vorzugsweise erfolgt die Vermischung und Homogenisierung über einen Mischkopf. Die homogenisierte Schaumzusammensetzung wird in ein formgebendes Element mit vordefinierter Geometrie eingebracht. In Folge der Reaktion des Polyisocyanats mit dem Polyol und dem Treibmittel erfolgt ein Aufschäumen im formgebenden Element. Im Anschluss an die vollständige Härtungsreaktion kann das formgebende Element entfernt werden und der geschäumte Formkörper entnommen werden.

Der geschäumte Formkörper hat vorzugsweise einen rechteckigen Querschnitt. Dadurch lassen sich die Formkörper besonders einfach und lückenlos Brandschutzprofile in einem Wand- oder Deckendurchbruch verarbeiten.

Ein fünfter Gegenstand ist auch die Verwendung mindestens eines nachhaltigen Füllstoffs ausgewählt aus der Gruppe bestehend aus (Kraft-)Lignin, Stärke und Mischungen daraus in einer Polyol-basierten Basiszusammensetzung umfassend mindestens ein nachhaltiges Polyol zur Verbesserung der Aschenkrustenhärte unter Hitzeeinwirkung eines aus der Polyol-basierten Basiszusammensetzung hergestellten Formkörpers.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

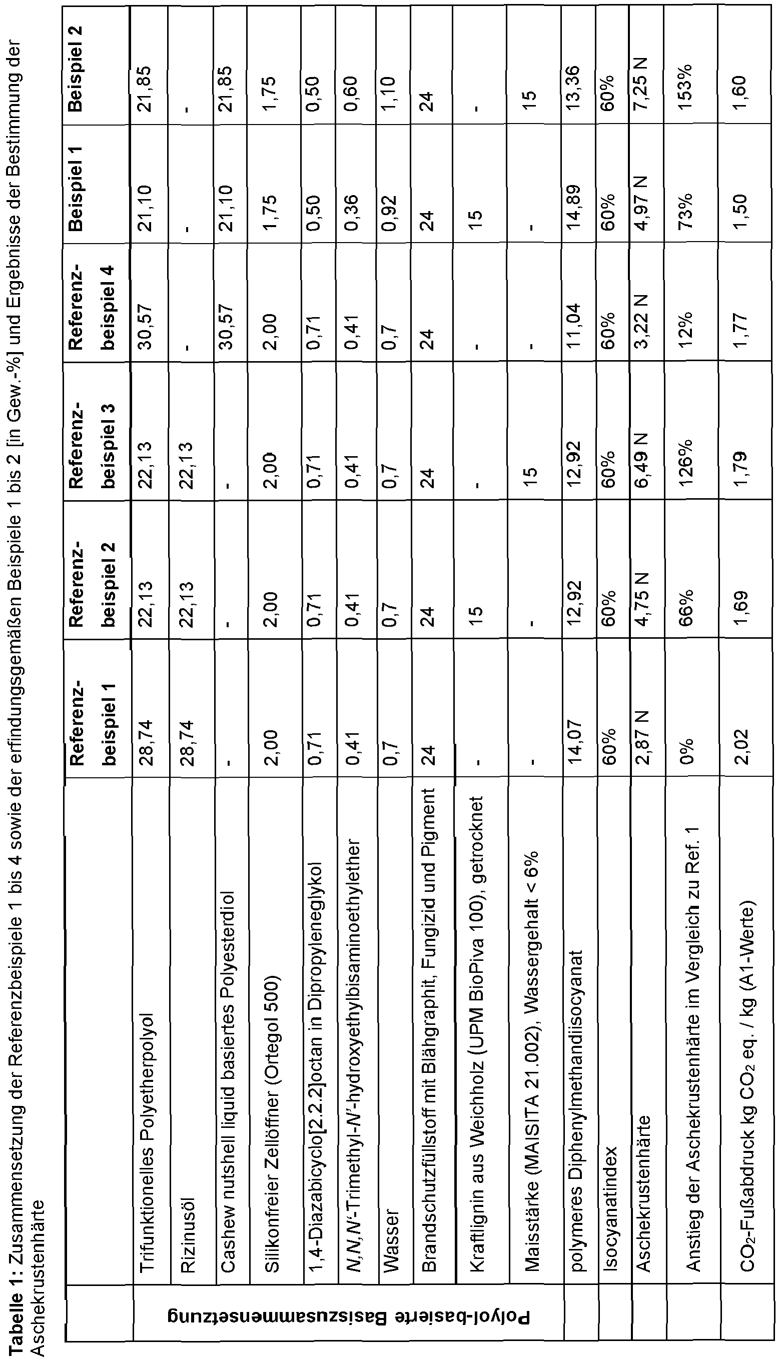

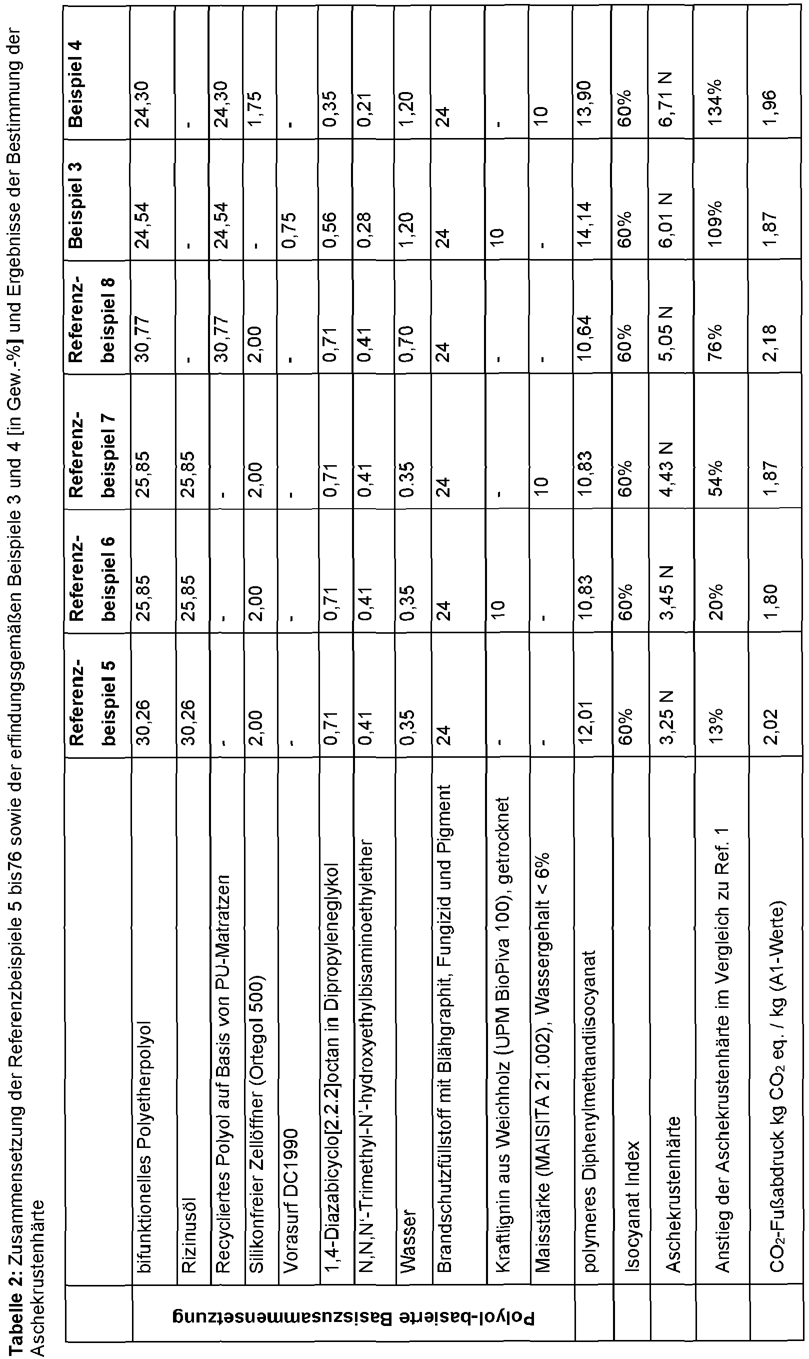

### Herstellung eines geschäumten Formkörpers (Schaumblock)

Die einzelnen Komponenten der Beispiele in Tabelle 2 und 3 wurden in einem geeigneten Behälter (z.B. einem Pappbecher) mit einem Holzspatel zu einer homogenen Mischung verrührt. Anschließend wurde die Mischung in eine Plastikform (20 cm × 13.5 cm × 5 cm) in einem verschließbaren Metallgehäuse gegeben und das Gehäuse verschlossen. Nach ca. 5 min wurde der geschäumte Formkörper aus der Form entfernt.

### Marko-TMA und Bestimmung der Aschekrustenhärte

Aus dem hergestellten Formkörper wurde eine zylinderförmige Probe mit einem Durchmesser von 45 mm und einer Höhe von 20 mm ausgestanzt. Diese wurde in einen Metallzylinder gebracht, mit einem 100 g Gewicht bestückt und in die Makro TMA der Fa. ASG Analytik-Service Gesellschaft eingebracht. Die Probe wurde mittels folgendem Temperaturprogramm verascht: Mit einer Heizrate von 15 °C/min wurde der Metallzylinder auf 650 °C erhitzt. Nachdem diese Temperatur für 10 min gehalten wurde, ließ man den Messaufbau auf Raumtemperatur abkühlen. Mit einem Texture Analyzer CT3 4500 der Fa. Brookfield (FOCS7 -Aufsatz) wurde die Aschekrustenhärte der so entstandenen Asche bestimmt.

## Patentansprüche

1. Polyol-basierte Basiszusammensetzung zur Herstellung eines geschäumten Formkörpers für Brandschutzanwendungen umfassend
- mindestens ein nachhaltiges Polyol a1)
- mindestens ein dämmschichtbildendes Brandschutzadditiv, sowie
- ein Treibmittel,
**dadurch gekennzeichnet, dass** die Polyol-basierte Basiszusammensetzung mindestens einen nachhaltigen Füllstoff ausgewählt aus der Gruppe bestehend aus Stärke, Lignin oder Mischungen daraus umfasst.

2. Polyol-basierte Basiszusammensetzung gemäß Anspruch 1, **dadurch gekennzeichnet, dass** das nachhaltige Polyol a1) auf einem oder mehreren Naturölen basiert.

3. Polyol-basierte Basiszusammensetzung gemäß Anspruch 2, **dadurch gekennzeichnet, dass** das Naturöl ausgewählt ist aus der Gruppe bestehend aus Sojabohnenöl, Canolaöl, Cashewnußschalenöl, Sonnenblumenöl, Maisöl, Leinsamenöl, Mohnsamenöl, Baumwollsamenöl, Tungöl, Palmöl, Erdnussöl, Fischöl, Olivenöl, Safloröl, Rapsöl und Kokosöl.

4. Polyol-basierte Basiszusammensetzung gemäß Anspruch 2 oder 3, **dadurch gekennzeichnet, dass** das nachhaltige Polyol a1) ein auf Cashewnußschalenöl basierendes Polyol ist.

5. Polyol-basierte Basiszusammensetzung gemäß Anspruch 4, **dadurch gekennzeichnet, dass** das nachhaltige Polyol a1) ein Cashew-Nussschalenöl basierendes Polyetherpolyol oder ein Cashew-Nussschalenöl basierendes Polyesterpolyol oder eine Mischung daraus ist.

6. Polyol-basierte Basiszusammensetzung gemäß Anspruch 1, **dadurch gekennzeichnet, dass** das nachhaltige Polyol a1) ein recycliertes Polyol, welches aus Polyurethan basierten Matratzen hergestellt wurde, ist.

7. Polyol-basierte Basiszusammensetzung gemäß einem der vorhergehenden Ansprüche, **dadurch gekennzeichnet, dass** die Polyol-basierte Basiszusammensetzung ferner ein weiteres Polyol a2) umfasst, wobei das weitere Polyol a2) kein nachhaltiges Polyol a1) ist.

8. Polyol-basierte Basiszusammensetzung gemäß einem der vorhergehenden Ansprüche, **dadurch gekennzeichnet, dass** das Treibmittel eine oder mehrere Verbindungen umfasst, die in der Lage sind nach Aktivierung durch Reaktion CO₂ freizusetzen.

9. Schaumzusammensetzung umfassend eine Polyol-basierte Basiszusammensetzung gemäß einem der vorhergehenden Ansprüche und mindestens ein Polyisocyanat.

10. Verfahren zur Herstellung eines geschäumten Formkörpers umfassend
a. das Vermischen der Komponenten der Schaumzusammensetzung gemäß Anspruch 9,
b. Einbringen der Schaumzusammensetzung in ein formgebendes Element,
c. nach der Reaktion der Komponenten der Schaumzusammensetzung Entfernen des formgebenden geschäumten Formkörpers aus dem formgebenden Element.

11. Geschäumter Formkörper hergestellt aus einer Schaumzusammensetzung gemäß Anspruch 9.

12. Verwendung mindestens eines nachhaltigen Füllstoffs ausgewählt aus der Gruppe bestehend aus Lignin, Stärke und Mischungen daraus in einer Polyol-basierten Basiszusammensetzung umfassend mindestens ein nachhaltiges Polyol a1) zur Verbesserung der CO₂-Bilanz des geschäumten Formkörpers

13. Verwendung gemäß Anspruch 12, **dadurch gekennzeichnet, dass** der geschäumte Formkörper eine verbesserte Aschekrustenhärte nach Hitzeeinwirkung aufweist.
